# EUROPÄISCHE PATENTANMELDUNG

(11) **EP 1 591 864 A2**
(43) Veröffentlichungstag der Anmeldung: **02.11.2005**
(21) Anmeldenummer: 05008479.7
(22) Anmeldetag: 19.04.2005
(51) Int. Cl.: G06F 1/00

(54) **Verfahren zum Schützen von Daten eines Datenträgers gegen DFA-Angriffe**

(30) Priorität: 29.04.2004 DE 102004021088
(71) Anmelder: Giesecke & Devrient GmbH, 81677 München (DE)
(72) Erfinder: Bouabdallah, Nouredine, 86159 Augsburg (DE); Lamla, Michael, 80638 München (DE); Wirén, Arvid, 81927 München (DE); Baldischweiler, Michael, 81825 München (DE)

(57) **Zusammenfassung**

Die Erfindung schafft ein Verfahren zum Schützen mindestens eines Datums (Fehlbedienungszähler, Zugriffsbedingung für PIN-Prüfung Zustandsbedingung bzw. Zustandskennzeichen etc.) von sensiblen Daten eines Datenträgers, die den Zugriff auf den Datenträger steuern oder beeinflussen, gegen einen Angriff, insbesondere DFA-Angriff, auf den Datenträger. Bei dem Verfahren werden von dem Datum X zwei Kopien bereitgestellt, wahlweise ein Mal in verfälschter Form f(X). Die beiden Kopien werden miteinander verglichen, z.B. in zwei Registern RL, RH. Bei einem positiven Vergleichsergebnis wird das Datum X als gültiges Datum akzeptiert wird, und bei einem negativen Vergleichsergebnis wird das Datum als ungültig verworfen.

## Beschreibung

Die Erfindung betrifft ein Verfahren zum Verfahren zum Schützen von Daten eines Datenträgers gegen einen Angriff, insbesondere DFA-Angriff, auf den Datenträger. Weiter betrifft die Erfindung einen Mikroprozessor mit dem darin implementierten Verfahren und einen Datenträger, insbesondere ein Chipmodul bzw. eine Chipkarte mit einem solchen Mikroprozessor. Das Verfahren zielt insbesondere auf sensible Daten ab, die den Zugriff auf den Datenträger steuern oder beeinflussen, ist aber nicht darauf beschränkt.

Ein Datenträger im Sinn der Erfindung ist ein Rechnersystem, bei dem die Ressourcen, d.h. Speicherressourcen und/oder Rechenkapazität (Rechenleistung) begrenzt sind, z.B. eine Chipkarte (Smart Card, Mikroprozessor-Chipkarte). Der Datenträger hat einen Körper, in dem ein Mikroprozessor angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines volumigen Tokens. Die Chipkarte kann weiter eine oder mehrere beliebige Schnittstellen für kontaktlose und/ oder kontaktbehaftete Kommunikation mit einem Lesegerät oder Datenverarbeitungssystem (z.B. Personal Computer, Workstation, Server) haben.

Eine Chipkarte wird in ihrem Lebenslauf zuerst initialisiert, wobei Daten und/oder Programmcode (z.B. von Anwendungen) in die Chipkarte einprogrammiert werden, die für eine Vielzahl von Chipkarten identisch sind, und anschließend personalisiert, wobei Daten und/oder Programmcode einprogrammiert werden, die für eine einzelne Chipkarte oder für einige wenige Chipkarten spezifisch sind.

In einer Chipkarte sind eine Mehrzahl von sensiblen Daten abgespeichert, die den Zugriff auf die Chipkarte steuern oder beeinflussen. Je nachdem, ob die Chipkarte bereits initialisiert bzw. personalisiert ist, können unterschiedliche und unterschiedlich gestaltete zugriffssteuernde sensible Daten in der Chipkarte abgespeichert sein. Zu den sensiblen Daten zählen z.B. der Fehlbedienungszähler (FBZ) (vgl. weiter unten), die PIN (personal identification number), Zugriffsbedingungen (access conditions), Zustandsbedingungen (= Zustandskennzeichen, state conditions, state flags), wie z.B. Initialisierungs-Zustandsbedingungen, die angeben, ob die Chipkarte initialisiert ist oder nicht, Personalisierungs-Zustandsbedingungen, die angeben, ob die Chipkarte personalisiert ist oder nicht, und ähnliche, den Zugriff auf die Chipkarte steuernde oder beeinflussende Daten.

Bei vielen Chipkarten wird zum Schutz von Daten und Anwendungen die Eingabe einer PIN über ein Chipkarten-Terminal verlangt. Die eingegebene PIN wird mit einer in einem nichtflüchtigen Speicher (EEPROM, EEPROM = electrically erasable random access memory) abgespeicherten PIN verglichen. Stimmt die über das Terminal eingegeben PIN mit der abgespeicherten PIN überein, wird eine positive Meldung an das Terminal übermittelt und der Zugriff auf die Daten und Anwendungen bzw. auf vorbestimmte zulässige Daten und Anwendungen der Chipkarte gewährt. Zur Absicherung falscher PIN-Eingaben hat die Chipkarte einen Fehlbedienungszähler (FBZ), dessen Wert am Anfang einen Maximalwert (Ursprungswert) hat und der bei jeder falschen Eingabe der PIN verringert wird. Sobald der Wert des Fehlbedienungszählers bei Null angelangt ist, wird die Chipkarte für den Benutzer gesperrt und kann höchstens durch korrekte Eingabe eines Freigabecodes, mit dem sich der Benutzer gegenüber der Chipkarte authentisiert, wieder freigegeben werden. Bei einer korrekten Eingabe der PIN wird der Fehlbedienungszähler wieder auf den Maximalwert (Ursprungswert) hochgesetzt, sofern zuvor der Wert des FBZ noch nicht den Wert Null erreicht hatte.

Zugriffsbedingungen für Speicherbereiche oder Dateien einer Chipkarte steuern, ob ein Zugriff, wahlweise ein Schreibzugriff und/oder ein Lesezugriff, auf den Speicherbereich bzw. die Datei zugelassen wird oder nicht. Andere Zugriffsbedingungen steuern, ob für einen Zugriff eine PIN-Eingabe erforderlich ist oder nicht.

In Abhängigkeit vom Wert von Initialisierungs-Zustandsbedingungen bzw. Personalisierungs-Zustandsbedingungen einer Chipkarte sind unterschiedliche Speicherbereiche und/oder Dateien der Chipkarte für den Zugriff freigegeben bzw. gesperrt.

Die zugriffssteuernden sensiblen Daten wie z.B. die PIN, der Fehlbedienungszähler (FBZ), Zugriffsbedingungen und Zustandsbedingungen sind bei einer Chipkarte in einem nichtflüchtigen Speicher, z.B. im EEPROM, abgespeichert. Jedes Mal, wenn ein zugriffssteuerndes sensibles Datum bearbeitet, z.B. geprüft oder geändert, werden soll, wird das Datum vom nichtflüchtigen Speicher in den Arbeitsspeicher, in der Regel einen flüchtigen RAM (random access memory), kopiert und im Arbeitsspeicher nach Bedarf bearbeitet. Eine Prüfung der zugriffssteuernden sensiblen Daten auf Integrität vor ihrer Bearbeitung findet nicht statt. Nach der Bearbeitung werden die ggf. bearbeiteten sensiblen Daten (z.B. Fehlbedienungszähler mit geändertem Zählerstand) in den nichtflüchtigen EEPROM zurück kopiert. Auch beim zurück Kopieren der Daten in den EEPROM findet keine Prüfung der Daten auf Integrität statt.

Mit der differentiellen Fehleranalyse (DFA, differential fault analysis) wurde ein Verfahren entwickelt, mit dem sich der geheime Schlüssel einer kryptographischen Berechnung ermitteln lässt. Bei der DFA wird auf einen Mikroprozessor, während dieser eine kryptographische Berechnung durchführt, ein DFA-Angriff vorgenommen, z.B. indem eine Spannungsspitze oder ein Lichtblitz an den Mikroprozessor angelegt wird. Der DFA-Angriff führt dazu, dass der Mikroprozessor Fehler bei der Berechnung macht. Aus diesen Fehlern kann der geheime Schlüssel ermittelt werden.

Nicht nur bei einer kryptographischen Berechnung, sondern auch bei einer beliebigen Rechenoperation in einem Datenträger (z.B. Chipkarte), bei der Daten im Datenträger bearbeitet werden, kann ein DFA-Angriff dazu führen, dass der Mikroprozessor Fehler macht, so dass z.B. Daten verfälscht werden. Solange die Daten im EEPROM sind, sind sie sicher. Während der Bearbeitung sind die Daten allerdings vorübergehend außerhalb des sicheren EEPROM abgelegt, z.B. in Datenbussen oder im flüchtigen Arbeitsspeicher RAM, wo sie durch Angriffe verfälscht werden können.

Aus DE 101 22 505 A1 ist ein Verfahren zum Schützen eines Registerinhalts eines Rechners, z.B. einer Chipkarte, gegen Manipulationen bekannt. Bei dem Verfahren wird eine Kopie des zu schützenden Registerinhalts angelegt und bedarfsweise, z.B. bei jeder Ausführung eines Befehls, der Inhalt des zu schützenden Registers mit der Kopie verglichen. Stimmen Kopie und Registerinhalt nicht überein, wird von einer Manipulation ausgegangen. Wahlweise ist die Kopie gegenüber dem Registerinhalt im Original gezielt verfälscht. Hierdurch ist verschleiert, welche Kopie zu welchem Register gehört. Eine gleichartige Manipulation von Register und Kopie ist dadurch erschwert.

Eine weitere bekannte Maßnahme zum Schutz eines Datenträgers gegen Angriffe ist die Verwendung eines Zählers (z.B. als Zustandszähler, Programmzähler oder Ereigniszähler bezeichnet), dessen Zählerstand während der Abarbeitung eines Programmcodes hochgezählt wird und an vorbestimmten Prüfpunkten mit einem Soll-Zählerstand verglichen wird. Wird durch einen Angriff ein Teil des Programmcodes übersprungen, stimmt an einem nachfolgenden Prüfpunkt der Zählerstand des Zählers nicht mit dem erwarteten Soll-Zählerstand überein, so dass der Angriff erkannt wird.

So ist aus DE 101 56 394 A1 ein Verfahren zur kontrollierten Ausführung eines in einem tragbaren Datenträger implementierten Programms bekannt. Das Programm ist aus mehreren kontrollierten Abschnitten aufgebaut. Bei der Ausführung jedes kontrollierten Abschnitts des Programms wird ein Zustandszähler (Ereigniszähler, Programmzähler) verändert, um die Abarbeitung des jeweiligen kontrollierten Abschnitts anzuzeigen. An mindestens einem Prüfpunkt wird der Stand des Zustandszählers mit einem zulässigen Wert verglichen. Bei Übereinstimmung wird das Programm fortgesetzt, bei Abweichung erfolgt eine Fehlerbehandlung. Falls durch einen kontrollierten Sprungbefehl ein oder mehrere kontrollierte Abschnitte übersprungen werden, wird der Zustandszähler so weiter gezählt, als wären die übersprungenen Abschnitte ausgeführt worden. Die kontrollierten Abschnitte können beispielsweise nacheinander ausgeführte Verarbeitungsstufen eines Kommandos betreffen, in denen beispielsweise zunächst das Kommando auf Gültigkeit überprüft wird, dann eine Berechtigungsüberprüfung erfolgt, dann eine Überprüfung der Ausführbarkeit des Kommandos erfolgt, z. B. durch eine Prüfung, ob angeforderte Daten vorhanden sind, und schließlich das Kommando ausgeführt wird, indem z. B. angeforderte Daten in einen Ausgabepuffer geschrieben werden.

Aufgabe der Erfindung ist es, einen Verfahren zu schaffen, um sensible Daten eines Datenträgers, die den Zugriff auf den Datenträger steuern oder beeinflussen, gegen Angriffe, wie z.B. DFA-Angriffe, zu sichern.

Die Aufgabe wird gelöst durch ein Verfahren nach dem unabhängigen Verfahrensanspruch. Ebenfalls angegeben ist ein entsprechender Datenträger. Vorteilhafte Ausgestaltungen der Erfindung sind in den abhängigen Ansprüchen angegeben.

Das erfindungsgemäße Verfahren gemäß dem unabhängigen Anspruch 1 geht von einem Datenträger aus, wie z.B. einer Chipkarte mit einem Mikroprozessor. In dem Datenträger sind ein oder mehrere sensible Daten abgespeichert, die den Zugriff auf den Datenträger steuern oder beeinflussen. Ein solches sensibles Datum kann beispielsweise der Wert eines Fehlbedienungszählers (FBZ) sein oder/und eine Zugriffsbedingung oder/und eine Zustandsbedingung. Ein Zugriffsbedingung kann beispielsweise eine Zugriffsbedingung sein, durch die angegeben ist, ob für einen Zugriff auf vorbestimmte Speicherinhalte des Datenträgers eine PIN-Eingabe erforderlich ist oder nicht. Eine Zustandsbedingung kann beispielsweise ein solche sein, durch die angegeben ist, ob der Datenträger personalisiert oder/und initialisiert ist.

Um einen Schutz eines solchen sensiblen Datums gegen Angriffe zu erreichen, wird bei dem Verfahren
a) eine erste Kopie des sensiblen Datums (X) bereitgestellt und eine zweite Kopie des sensiblen Datums (X) bereitgestellt,
b) woraufhin die erste Kopie und die zweite Kopie miteinander verglichen werden und
c) bei einem positiven Vergleichsergebnis das Datum (X) als gültiges Datum (X) akzeptiert wird und bei einem negativen Vergleichsergebnis das Datum (X) als ungültig verworfen wird.

Falls kein Angriff auf das Datum erfolgt, sind die erste Kopie des sensiblen Datums und die zweite Kopie des sensiblen Datums unverfälscht, das Vergleichsergebnis ist positiv und das Datum wird als gültig akzeptiert.

Falls ein Angriff auf das Datum erfolgt, ist es unwahrscheinlich, dass die beiden Kopien des Datums gleichermaßen verfälscht sind. Das Vergleichsergebnis ist in der Regel negativ, und das Datum wird als verfälscht erkannt und als ungültig verworfen.

Daher ist gemäß Anspruch 1 ein Verfahren geschaffen, mit dem sensible Daten eines Datenträgers, die den Zugriff auf den Datenträger steuern oder beeinflussen, gegen Angriffe wie DFA-Angriffe gesichert sind.

Wahlweise wird die zweite Kopie des Datums in verfälschter Form bereitgestellt. Hierdurch ist verschleiert, dass die beiden Kopien des Datums zusammen gehören. Das Datum kann insbesondere dadurch verfälscht sein, dass bei der zweiten Kopie statt des Datums X eine Funktion des Datums f(X) bereitgestellt wird. Beispielsweise hat das Datum in verfälschter Form einen Wert, der gleich dem Komplementärwert des Werts des Datums selbst ist. Mit anderen Worten wird beispielsweise für die zweite Kopie der Komplementärwert NOT(X) bereitgestellt, wenn für die erste Kopie der Wert X bereitgestellt wird.

Gemäß einer bevorzugten Ausführungsform der Erfindung wird nach mindestens einer Rechenoperation unter Verwendung eines Datums, insbesondere nach einem Abspeichern und/oder nach einem Vergleichen mit positivem Vergleichsergebnis, ein Ereigniszähler um einen vorbestimmten Zählschritt verändert. Vorzugsweise wird der Ereigniszähler nach jedem kontrollierten Abschnitt einer Bearbeitung des Datums um den vorbestimmten Zählschritt verändert. Wird auf Grund eines Angriffs (z.B. DFA-Angriff) auf den Datenträger ein Teil der Rechenoperationen unzulässigerweise übersprungen, stimmt der Zählerstand des Ereigniszählers nicht mit einem erwarteten Sollwert überein und der Angriff wird erkannt. Der Ereigniszähler kann beispielsweise im Wesentlichen so eingerichtet sein wie der eingangs beschriebene aus DE 101 56 394 A1 bekannte Zustandszähler.

Das Datum wird gemäß einer bevorzugten Ausführungsform zusätzlich in einen Ziel-Speicherbereich gespeichert. Der Ziel-Speicherbereich kann z.B. ein Arbeitsspeicher sein, in dem das Datum bearbeitet werden soll, oder ein - vorzugsweise nichtflüchtiger - Aufbewahrungs-Speicher, in den ein Ergebnis einer Bearbeitung übertragen werden soll.

Gemäß einer ersten Alternative wird das Datum in den Ziel-Speicherbereich gespeichert nachdem die erste Kopie und die zweite Kopie des Datums miteinander verglichen worden sind. Diese Alternative ist beispielsweise für das Kopieren von Daten vom EEPROM in den Arbeitsspeicher RAM eines Datenträgers bevorzugt. Zwei im EEPROM vorhandene Kopien des Datums werden miteinander verglichen. In der Regel werden dabei die beiden Kopien im EEPROM zuerst aus ihren Speicherbereichen im EEPROM in zwei getrennte Prüfspeicher (z.B. Register) kopiert und an Hand der Prüfspeicher (z.B. Register) verglichen und dadurch auf Integrität geprüft. Erst nach erfolgreicher Integritätsprüfung wird das Datum in den RAM übertragen, wo es nachfolgend bearbeitet werden kann, wie weiter unten an Hand der Beispiele noch näher ausgeführt wird.

Wahlweise wird das Datum anlässlich des positiven Vergleichsergebnisses in den Ziel-Speicherbereich gespeichert.

Gemäß einer zweiten Alternative wird das Datum in den Ziel-Speicherbereich gespeichert bevor die erste Kopie und die zweite Kopie des Datums miteinander verglichen werden. Diese Alternative ist beispielsweise für das zurück Kopieren von Daten aus dem Arbeitsspeicher RAM eines Datenträgers zurück in den EEPROM bevorzugt, nachdem die Daten beispielsweise im RAM bearbeitet (geprüft, geändert etc.) worden sind. Mit anderen Worten wird ein Datum - das z.B. zuvor im RAM bearbeitet worden ist - zuerst in den EEPROM gespeichert, wobei im EEPROM zwei Kopien des Datums angelegt werden, und anschließend wird die Überprüfung auf Integrität an Hand der beiden Kopien im EEPROM durchgeführt, wie auch weiter unten an Hand der Beispiele noch näher ausgeführt wird. Bei dieser zweiten Ausführungsform werden vorzugsweise in zwei Teil-Speicherbereiche des Ziel-Speicherbereichs (z.B. EEPROM) ebenfalls zwei Kopien des Datums gespeichert, die nachfolgend miteinander verglichen werden. Vorzugsweise werden zum Vergleichen die Kopien zuerst aus den beiden Teil-Speicherbereichen des Ziel-Speicherbereichs in zwei getrennte Prüfspeicher (z.B. zwei getrennte Register) übertragen und der Vergleich der Kopien des Datums an Hand der Kopien in den Prüfspeichern (Registern) durchgeführt.

Gemäß einer bevorzugten Ausführungsform des Verfahrens
- wird in Schritt a) die erste Kopie des Datums in einem ersten Teil-Speicherbereich eines Quell-Speicherbereichs des Datenträgers bereitgestellt und die zweite Kopie des Datums in einem davon getrennten zweiten Teil-Speicherbereich des Quell-Speicherbereichs bereitgestellt und
- werden in Schritt b) das Datum aus dem ersten Teil-Speicherbereich und das Datum aus dem zweiten Teil-Speicherbereich miteinander verglichen.

Der Quell-Speicherbereich kann beispielsweise ein Aufbewahrungs-Speicher des Datenträgers ein, beispielsweise ein EEPROM des Datenträgers. Wahlweise wird nach dem Vergleichen gemäß Schritt b) und einem gemäß Schritt c) erzielten positiven Vergleichsergebnis das als gültig akzeptierte Datum in einen Ziel-Speicher übertragen, wobei in diesem Fall der Ziel-Speicher vorzugsweise ein Arbeitsspeicher des Datenträgers ist, beispielsweise ein RAM des Datenträgers.

Der mit dem Verfahren abzuwehrende (DFA-)Angriff (z.B. Lichtangriff, Spannungsspitze etc.) erfolgt beispielsweise während das Datum bearbeitet wird, z.B. kopiert, geprüft oder durch eine Rechenoperation bearbeitet wird, z.B. in seinem Wert verändert wird, oder dergleichen.

Vorzugsweise wird vor dem Vergleichen gemäß Schritt b), nacheinander
- das Datum in einen ersten Prüfspeicher - insbesondere ein erstes Register - gespeichert,
- das - ggf. verfälschte - Datum in einen zweiten Prüfspeicher - insbesondere ein zweites Register - gespeichert und
- das Vergleichen gemäß Schritt b) dadurch durchgeführt, dass der Inhalt des ersten Prüfspeichers (z.B. Registers) und der Inhalt des zweiten Prüfspeichers (z.B. Registers) miteinander verglichen werden.

Da das Datum zwei Mal nacheinander, also zeitlich versetzt, in einen Prüfspeicher gespeichert wird, nämlich ein Mal in den ersten Prüfspeicher und ein Mal in den zweiten Prüfspeicher, wird durch einen einzelnen Angriff nur eine der beiden gespeicherten Kopien der Daten beeinflusst, nämlich entweder die Kopie im ersten Prüfspeicher oder die Kopie im zweiten Prüfspeicher. Aus diesem Grund hat das Verfahren, bei dem die beiden Kopien des Datums nacheinander in zwei getrennte Prüfspeicher (z.B. Register) kopiert werden, eine besonders hohe Sicherheit.

Im folgenden wird die Erfindung anhand von Ausführungsbeispielen und unter Bezugnahme auf die Zeichnung näher erläutert, in der zeigen:
- Fig.: 1 ein Verfahren zum Schützen eines Datums eines Datenträgers vor einem DFA-Angriff, gemäß einer Ausführungsform der Erfindung;
- Fig. 2: ein Verfahren zum sicheren Kopieren eines Datums von einem EEPROM in einen RAM eines Datenträgers (A) und zum sicheren zurück Kopieren des Datums vom RAM in den EEPROM (B), gemäß einer Ausführungsform der Erfindung;
- Fig. 3: ein Verfahren zum Prüfen eines als Zugriffsbedingung verwendeten Bits, gemäß einer Ausführungsform der Erfindung;
- Fig. 4: ein Verfahren zum Prüfen eines als Fehlbedienungszähler verwendeten Bytes, gemäß einer Ausführungsform der Erfindung;
- Fig. 5: ein Verfahren zum sicheren Durchführen einer Rechenoperation an einem Datum, gemäß einer Ausführungsform der Erfindung, die z.B. Schritt 11 des Verfahrens aus Fig. 2 entsprechen kann.

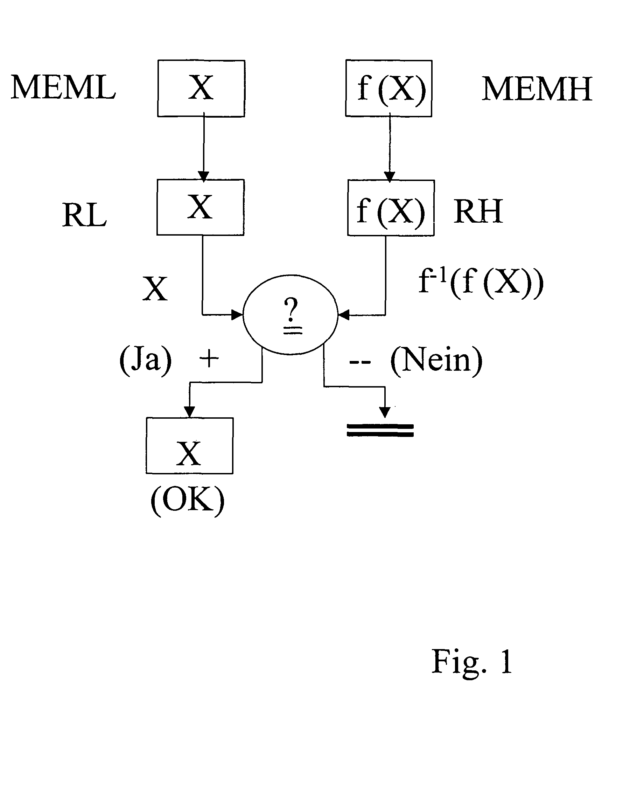

Fig. 1 zeigt ein Verfahren zum Schützen eines Datums X eines Datenträgers vor einem DFA-Angriff, gemäß einer Ausführungsform der Erfindung. Von dem Datum X werden zwei Kopien in einem Speicher MEM bereitgestellt. Der Speicher kann ein Quell-Speicherbereich MEMQ sein, aus dem ein Datum für eine nachfolgende Bearbeitung entnommen werden soll. Alternativ kann der Speicher MEM ein Ziel-Speicherbereich MEMZ sein, in den ein Datum nach einer erfolgten Bearbeitung gespeichert werden soll. Eine erste Kopie des Datums X wird in unverfälschter Form X in einem ersten Teil-Speicherbereich MEML des Speichers MEM bereitgestellt. Eine zweite Kopie des Datums X wird in verfälschter Form *ƒ*(*X*) in einem zweiten Teil-Speicherbereich MEMH des Speichers MEM bereitgestellt. Die erste Kopie X wird aus dem ersten Teil-Speicherbereich MEML in einen ersten Prüfspeicher (Register) RL gespeichert. Danach wird die verfälschte zweite Kopie *ƒ* (*X*) aus dem zweiten Teil-Speicherbereich MEMH in einen zweiten Prüfspeicher (Register) RH des Datenträgers gespeichert. Anschließend werden das Datum X aus dem ersten Prüfspeicher RL und das verfälschte Datum *ƒ (X)* aus dem zweiten Prüfspeicher RH miteinander verglichen ("=?"). Dabei wird für den Vergleich aus dem zweiten Prüfspeicher *ƒ*^{*-*1}( *f*(*X*)) herangezogen, um die Verfälschung wieder aufzuheben. Bei einem positiven Vergleichsergebnis (Zweig"+ (Ja)"), d.h. wenn X und *ƒ*^{*-*1}(*f(X*)) übereinstimmen, wird das Datum X als gültiges Datum X akzeptiert. Bei einem negativen Vergleichsergebnis (Zweig"-- (Nein)"), wird das Datum X als ungültig verworfen.

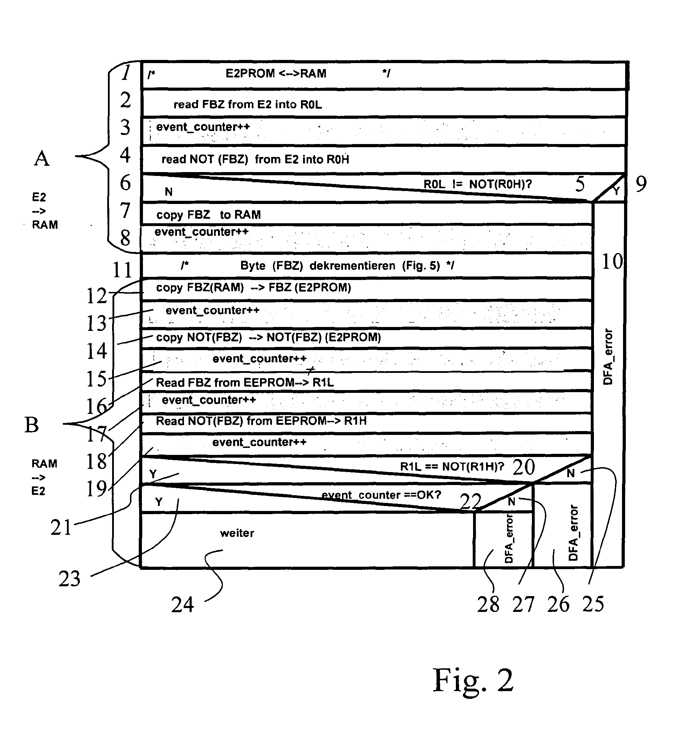

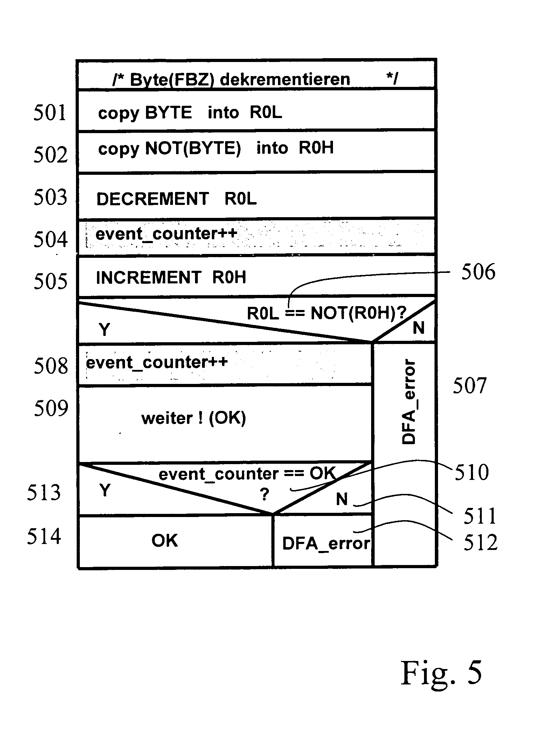

Fig. 2 zeigt ein Verfahren zum sicheren Kopieren eines Datums von einem EEPROM in einen RAM eines Datenträgers und zum sicheren zurück Kopieren des Datums vom RAM in den EEPROM, gemäß einer Ausführungsform der Erfindung. Als Datum ist der Wert des Fehlbedienungszählers FBZ vorgesehen. Von dem FBZ wird eine erste Kopie in unverfälschter Form FBZ im EEPROM abgespeichert und eine zweite Kopie im verfälschter Form NOT(FBZ), wobei NOT(FBZ) der Komplementärwert von FBZ ist, im EEPROM abgespeichert. Bei dem Verfahren gemäß Fig. 2 wird FBZ ins RAM kopiert (Teilverfahren A = Schritte 1 bis 10) und anschließend wieder ins EEPROM zurück kopiert (Teilverfahren B = Schritte 12 bis 28). Dazwischen kann FBZ bearbeitet werden (Schritt 11). Die Bearbeitung des FBZ kann z.B. wie in Fig. 5 dargestellt erfolgen. Das Kopieren vom EEPROM ins RAM (Teilverfahren A) und zurück vom RAM ins EEPROM (Teilverfahren B) sind im Wesentlichen unabhängig voneinander und können auch getrennt durchgeführt werden und werden jedes unabhängig voneinander gemäß der Erfindung durchgeführt. Für das Teilverfahren A ist der EEPROM Quell-Speicher und der RAM Ziel-Speicher. Für das Teilverfahren B ist der RAM Quell-Speicher und der EEPROM Ziel-Speicher.

Mit dem Verfahren gemäß Fig. 2 soll, gemäß der Erfindung, bei einem Datenträger ein Angriffsszenario wie das folgende abgewehrt werden. Wird während des Kopierens von Daten, hier des Werts des Fehlbedienungszählers, vom nichtflüchtigen Speicher in den Arbeitsspeicher ein DFA-Angriff durchgeführt, kann es vorkommen, dass auf Grund des DFA-Angriffs der Inhalt der Daten geändert wird. Der Angriff kann während des Lesens aus dem nichtflüchtigen Speicher und/oder während des Schreibens in den Arbeitsspeicher erfolgen. Beispielsweise wird durch den DFA-Angriff beim Kopieren der Wert des Fehlbedienungszählers (FBZ), der bereits den Grenzwert erreicht hat, ab dem der Datenträger gesperrt ist, geändert, so dass der Zugriff auf den gesperrten Datenträger wieder ermöglicht wird. Alternativ wird der Fehlbedienungsspeicher (FBZ) beim zurück Speichern in den nichtflüchtigen Speicher verfälscht, so dass dort z.B. ein falscher Zählerstand des FBZ abgespeichert wird.

Zuerst wird der im EEPROM abgespeicherte (Schritt 1, nicht explizit dargestellt) Wert des Fehlbedienungszählers FBZ aus dem EEPROM in ein erstes Register R0L gelesen (Schritt 2). Anschließend wird ein Ereigniszähler (event counter) um einen Zählschritt hochgezählt (Schritt 3). Nachfolgend wird der an einem anderen Ort im EEPROM abgespeicherte Komplementärwert des Fehlbedienungszählers NOT(FBZ) aus dem EEPROM in ein zweites Register R0H gelesen (Schritt 4). Der Inhalt des ersten Registers R0L und der Komplementärwert des Inhalts des zweiten Registers NOT(ROH) werden miteinander verglichen, genauer auf fehlende Übereinstimmung geprüft (Schritt 5: Ungleichheitszeichen "!=" ). Bei einem negativen Vergleichsergebnis, d.h. falls R0L und NOT(R0H) nicht übereinstimmen (Schritt 9, "Y" für "YES", "JA", da hier auf Ungleichheit statt auf Gleichheit geprüft wird; im Sinn der Überprüfung auf Ungleichheit ist zwar das Vergleichsergebnis positiv; im Zusammenhang mit der Erfindung wird das Vergleichsergebnis aber als negativ bezeichnet, da die beiden verglichenen Größen gemäß dem Vergleich nicht übereinstimmen), wird ein DFA-Fehler (DFA_error) identifiziert und folglich ein DFA-Angriff vermutet (Schritt 10) und FBZ als ungültig verworfen. Falls hingegen, ausgehend von dem Vergleich in Schritt 5, R0L und NOT(ROH) übereinstimmen (Schritt 6, positives Vergleichsergebnis "N"), wird der Wert des Fehlbedienungszählers FBZ als gültig akzeptiert und in das RAM kopiert (Schritt 7). Anschließend wird der Ereigniszähler um einen weiteren Zählschritt hochgezählt (Schritt 8). Der Fehlbedienungszähler kann nun im RAM bearbeitet werden, z.B. dekrementiert werden (Schritt 11), z.B. weil eine erforderliche PIN mittlerweile richtig eingegeben wurde. Das Dekrementieren des FBZ kann beispielsweise gemäß dem Verfahren durchgeführt werden, das an Hand von Fig. 5 beschrieben ist.

Nun wird - ggf. nach einer Bearbeitung des Fehlbedienungszählers - der Wert des Fehlbedienungszählers FBZ aus dem RAM in einen ersten Teil-Speicherbereich MEMZL des EEPROM gespeichert (Schritt 12) und anschließend der Ereigniszähler um einen weiteren Zählschritt hochgezählt (Schritt 13). Danach wird der Komplementärwert des Fehlbedienungszählers NOT(FBZ) aus dem RAM in einen zweiten Teil-Speicherbereich MEMZH des EEPROM gespeichert (Schritt 14) und anschließend der Ereigniszähler um einen weiteren Zählschritt hochgezählt (Schritt 15). Nachfolgend wird, für die Überprüfung des Werts FBZ auf Integrität, der Wert des Fehlbedienungszählers FBZ aus dem ersten Teil-Speicherbereich MEMZL des EEPROM in ein erstes Register R1L gespeichert (Schritt 16) und anschließend der Ereigniszähler um einen weiteren Zählschritt hochgezählt (Schritt 17). Danach wird der Komplementärwert des Fehlbedienungszählers NOT(FBZ) aus dem zweiten Teil-Speicherbereich MEMZH des EEPROM in ein zweites Register R1H gespeichert (Schritt 18) und anschließend der Ereigniszähler um einen weiteren Zählschritt hochgezählt (Schritt 19). Der Inhalt des ersten Registers R1L und der Komplementärwert des Inhalts des zweiten Registers NOT(R1H) werden miteinander verglichen, genauer auf Übereinstimmung geprüft (Schritt 20). Falls R1L und NOT(R1H) nicht übereinstimmen (Schritt 25) (negatives Vergleichsergebnis), wird ein DFA-Fehler (DFA_error) identifiziert und folglich ein DFA-Angriff vermutet (Schritt 26) und FBZ als ungültig verworfen. Falls hingegen, ausgehend von dem Vergleich in Schritt 20, R1L und NOT(R1H) übereinstimmen (Schritt 21) (positives Vergleichsergebnis), wird nun der Wert des Ereigniszählers überprüft (Schritt 22). Falls der Wert des Ereigniszählers unzulässig ist (Schritt 27), wird ein DFA-Fehler (DFA_error) identifiziert und folglich ein DFA-Angriff vermutet (Schritt 28) und FBZ als ungültig verworfen. Falls hingegen der Ereigniszähler, gemäß der Überprüfung in Schritt 22, einen zulässigen Wert hat (Schritt 23), wird der in das EEPROM zurück gespeicherte Wert des Fehlbedienungszählers FBZ als gültig akzeptiert, und der Betrieb des Datenträgers kann weitergeführt werden (Schritt 24).

Das Verfahren ist ebenfalls geeignet gegen einen DFA-Angriff, bei dem der Wert einer abgespeicherten PIN geändert wird, so dass trotz Eingabe einer falschen PIN der Zugriff auf die Chipkarte gewährt würde. In diesem Fall wird das Verfahren gemäß Fig. 2 angewandt, um - statt des FBZ - die PIN auf Integrität zu prüfen.

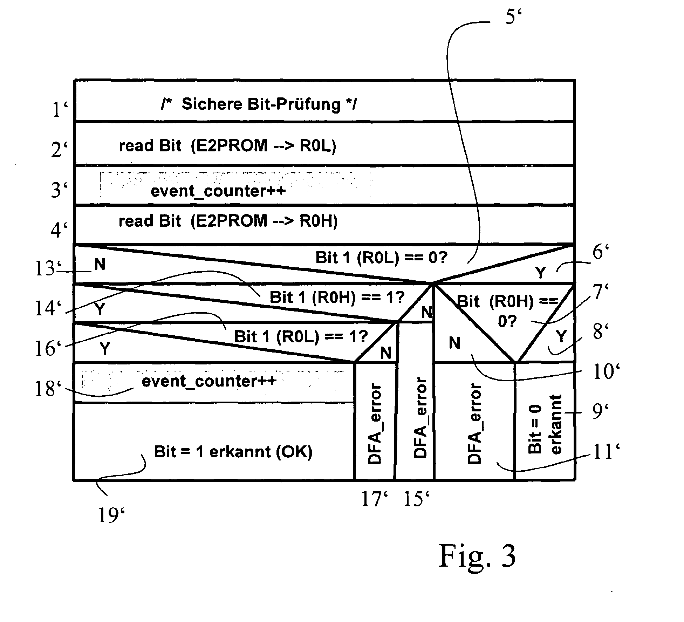

Fig. 3 zeigt ein Verfahren zum Prüfen eines als Zugriffsbedingung verwendeten Bits, gemäß einer Ausführungsform der Erfindung. Das Verfahren gemäß dieser Ausführungsform ist besonders als Maßnahme gegen DFA-Angriffe geeignet, durch die der Wert einer Zugriffsbedingung geändert wird, so dass beispielsweise die Zugriffsbedingung umgangen werden könnte. Wird insbesondere beispielsweise durch den DFA-Angriff der Wert der PIN-Zugriffsbedingung, der die Eingabe einer PIN zum Zugriff auf die Chipkarte verlangt, dahingehend geändert, dass eine PIN-Eingabe nicht erforderlich ist, kann die PIN-Eingabe umgangen werden und ein Zugriff auf die Chipkarte ohne PIN-Prüfung gewährt werden. Das Verfahren ist auch zum Prüfen eines Bits geeignet, das als Zustandsbedingung verwendet wird, durch die der Personalisierungszustand oder Initialisierungszustand eines Datenträgers angegeben ist.

Von dem Bit sind zwei Kopien in zwei unterschiedlichen Teil-Speicherbereichen (Bits) MEMQL, MEMQH des EEPROM abgespeichert. Bei dem Verfahren gemäß Fig. 3 wird zuerst, ähnlich wie in den Schritten 2, 3 und 4 von Fig. 2, in den Schritten 2', 3', und 4', der Wert des Bits aus dem ersten Teil-Speicherbereich MEMQL im EEPROM in ein erstes Register R0L übertragen und aus dem zweiten Teil-Speicherbereich MEMQH in ein zweites Register R0H übertragen. Bei dieser Ausführungsform ist das Bit in beiden Teil-Speicherbereichen MEMQL, MEMQH des EEPROM bzw. in beiden Registern R0L, R0H unverfälscht, alternativ könnte auch eines der beiden Register einen verfälschten Bitwert enthalten. In Schritt 5' wird das Bit im ersten Register R0L nach Null geprüft. Falls das Bit im ersten Register R0L Null ist (Schritt 6'), wird das Bit im zweiten Register R0H auf Null geprüft (Schritt 7'). Falls das Bit im zweiten Register R0H Null ist (Schritt 8'), wird erkannt, dass das Bit im ersten Register R0L und das Bit im zweiten Register R0H gleich sind und gleich Null sind, und das Bit wird als Null erkannt (Schritt 9'). Falls in Schritt 7' das Bit im zweiten Register R0H nicht Null ist (Schritt 10') wird ein DFA-Fehler erkannt und das Bit als ungültig verworfen (Schritt 11'). Falls hingegen in Schritt 5' das Bit im ersten Register R0L nicht als Null erkannt wurde (Schritt 13'), wird das Bit im zweiten Register R0H auf Eins geprüft (Schritt 14'). Falls das Bit im zweiten Register R0H nicht Eins ist, ist es ungleich dem Bit im ersten Register R0L, und ein DFA-Fehler wird erkannt und das Bit als ungültig verworfen (Schritt 15'). Falls in Schritt 14' das Bit im zweiten Register R0H Eins ist, wird das Bit im ersten Register R0L auf Eins geprüft (Schritt 16'). Falls in Schritt 16' das Bit im ersten Register R0L nicht Eins ist, wird ein DFA-Fehler erkannt und das Bit als ungültig verworfen (Schritt 17'). Falls in Schritt 16' das Bit im ersten Register R0L Eins ist, wird der Ereigniszähler um einen Zählschritt hochgezählt (Schritt 18'). Das Bit wird als gültiges Bit mit dem Wert Eins erkannt (Schritt 19').

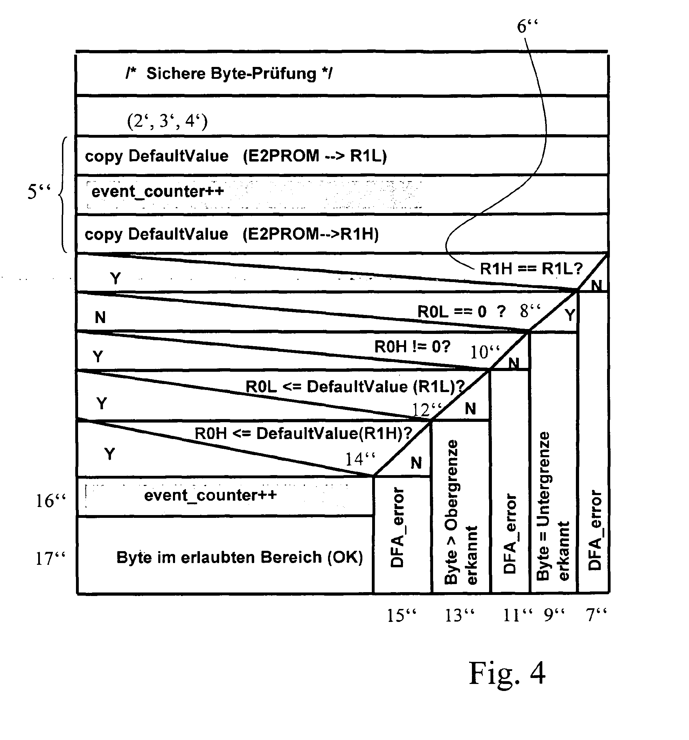

Fig. 4 zeigt ein Verfahren zum Prüfen eines als Fehlbedienungszähler verwendeten Bytes, gemäß einer Ausführungsform der Erfindung, wobei geprüft werden soll, ob der Wert des Bytes (Fehlbedienungszählers FBZ) in einem erlaubten Bereich liegt. Vom Fehlbedienungszähler sind zwei Kopien in zwei getrennten Teil-Speicherbereichen des EEPROM abgespeichert. Bei dem Verfahren wird zuerst, ähnlich wie in den Schritten 2', 3', 4' aus Fig. 3, der Wert des Fehlbedienungszählers (Bytes) aus den beiden Teil-Speicherbereichen des EEPROM in ein erstes Register R0L und ein zweites Register R0H kopiert (gespeichert, gelesen) (in Fig. 4 durch die Zeichen "2', 3', 4' " in der zweiten Zeile angedeutet). Anschließend wird ein Vorgabewert ("DefaultValue") für den Wert des Fehlbedienungszählers aus dem EEPROM gelesen. Von dem Vorgabewert sind ebenfalls eine erste und eine zweite Kopie im EEPROM abgelegt. Die erste Kopie des Vorgabewerts wird aus dem EEPROM in ein erstes Hilfs-Register R1L kopiert, danach wird ein Ereigniszähler hochgezählt, und anschließend wird die zweite Kopie des Vorgabewerts aus dem EEPROM in ein zweites Hilfs-Register R1H kopiert (Schritte 5").

Zuerst werden die Inhalte der beiden Hilfs-Register R1L, R1H auf Übereinstimmung geprüft (6"). Falls sie ungleich sind, liegt ein Fehler vor (7"). Folglich ist der Datenträger, in dem das Verfahren abläuft, für weitere Zugriffe gesperrt (7").

Falls die Inhalte der beiden Hilfs-Register R1L, R1H gleich sind, wird der Inhalt des ersten Registers R0L auf Null geprüft (8"). Falls R0L (8") Null ist, wird erkannt, dass der Fehlbedienungszähler den Wert Null (Untergrenze) erreicht hat (9"). Folglich ist der Datenträger, in dem das Verfahren abläuft, für weitere Zugriffe gesperrt (9").

Falls R0L (8") nicht Null ist, wird R0H auf Null geprüft (10") (Ungleichzeichen "!=" in Schritt 10"). Falls R0H (10") Null ist, wird ein DFA-Fehler erkannt (11"). Der Datenträger wird für weitere Zugriffe gesperrt (11").

Falls R0H (10") nicht Null ist, wird geprüft, ob R0L kleiner gleich dem Vorgabewert (DefaultValue(R0L)) für R0L ist (12"). Falls gemäß Schritt 12" R0L nicht kleiner gleich dem Vorgabewert ist, wird erkannt, dass R0L oberhalb des Vorgabewerts liegt (13"), also der Wert von R0L unzulässigerweise zu groß ist. Folglich wird der Datenträger, in dem das Verfahren abläuft, für weitere Zugriffe gesperrt (13").

Falls gemäß Schritt 12" R0L kleiner gleich dem Vorgabewert für R0L ist, wird erkannt, dass der Wert von R0L unterhalb des Vorgabewerts liegt, also zulässig ist. Danach wird geprüft, ob R0H kleiner gleich dem Vorgabewert für R0H ist (14"). Falls gemäß Schritt 14" R0H nicht kleiner gleich dem Vorgabewert ist, wird erkannt, dass R0H oberhalb des Vorgabewerts liegt (15"), also der Wert von R0H unzulässigerweise zu groß ist. Folglich wird der Datenträger, in dem das Verfahren abläuft, für weitere Zugriffe gesperrt (15").

Falls gemäß Schritt 14" R0H kleiner gleich dem Vorgabewert für R0H ist, wird erkannt, dass R0H unterhalb des Vorgabewerts liegt, also der Wert von R0H zulässig ist, und der Ereigniszähler weiter hochgezählt (16").

Insgesamt wird erkannt, dass der Wert des Fehlbedienungszählers (Bytes) im erlaubten Bereich liegt (17"). Weitere Zugriffe auf den Datenträger sind somit erlaubt.

Fig. 5 zeigt ein Verfahren zum sicheren Durchführen einer Rechenoperation an einem Datum, gemäß einer Ausführungsform der Erfindung. Die Rechenoperation besteht darin, ein Byte um einen vorbestimmten Betrag zu dekrementieren. Das Byte kann z.B. der Fehlbedienungszähler sein. Das Dekrementieren gemäß Fig. 5 kann beispielsweise als Schritt 11 bei dem Verfahren gemäß Fig. 2 eingesetzt werden.

Gemäß Fig. 5 wird der Wert des Bytes aus dem EEPROM in ein erstes Register R0L kopiert (501). Der an einem anderen Speicherort ebenfalls im EEPROM abgespeicherte Komplementärwert des Bytes wird aus dem EEPROM in ein zweites Register R0H kopiert (502). Der Wert im ersten Register R0L wird um den vorbestimmten Betrag dekrementiert (503). Anschließend wird ein Ereigniszähler um einen vorbestimmten Zählschritt hochgezählt (504). Danach wird der Komplementärwert im zweiten Register NOT(ROH) um den vorbestimmten Betrag inkrementiert (505), was einem Dekrementieren des nicht komplementären Originalwerts gleichbedeutend ist. Anschließend werden der dekrementierte Wert des Bytes im ersten Register R0L und der inkrementierte Komplementärwert des Bytes im zweiten Register NOT(R0H) verglichen (auf Übereinstimmung geprüft) (506). Falls der Vergleich 506 ergibt, dass R0L und NOT(R0H) nicht übereinstimmen, wird ein DFA-Fehler erkannt (507). Falls der Vergleich 506 ergibt, dass R0L und NOT(R0H) übereinstimmen, wird der Ereigniszähler um einen weiteren Zählschritt hochgezählt (508), und der Wert des dekrementierten Fehlbedienungszählers wird vorläufig als gültig akzeptiert (509). Anschließend wird der Wert des Ereigniszählers überprüft (510). Falls der Wert des Ereigniszählers nicht mit einem Sollwert übereinstimmt (511), wird ein DFA-Fehler erkannt (512). Falls hingegen der Wert des Ereigniszählers mit einem Sollwert übereinstimmt (513), wird der neue Wert des dekrementierten Fehlbedienungszählers FBZ als gültig akzeptiert (514).

Nachfolgend können der dekrementierte FBZ und der inkrementierte Komplementärwert NOT(FBZ) zurück in die beiden Teil-Speicherbereiche des EEPROM gespeichert werden, wobei die vorherigen Speicherwerte FBZ und NOT(FBZ) im EEPROM durch die neuen Werte des dekrementierten FBZ und des inkrementierten NOT(FBZ) überschrieben werden (beispielsweise wie in Fig. 2, Teilverfahren B, Schritte 12 bis 28 dargestellt).

Der Zustandzähler, der bei den oben angegebenen Ausführungsformen hochgezählt wurde, kann bei alternativen Ausführungsformen von Ereigniszählern auch in anderer Weise geändert werden, z.B. heruntergezählt werden, um den gleichen Effekt zu erzielen wie mit dem Hochzählen bei den obigen Ereigniszählern.

## Patentansprüche

1. Verfahren, bei einem Datenträger, der mindestens ein sensibles Datum (X) enthält, das den Zugriff auf den Datenträger steuert oder beeinflusst, zum Schützen des sensiblen Datums (X) gegen einen Angriff, insbesondere DFA-Angriff, auf den Datenträger, wobei bei dem Verfahren
a) eine erste Kopie des sensiblen Datums (X) bereitgestellt wird und eine zweite Kopie des sensiblen Datums (X) bereitgestellt wird,
b) die erste Kopie und die zweite Kopie miteinander verglichen werden und
c) bei einem positiven Vergleichsergebnis das Datum (X) als gültiges Datum (X) akzeptiert wird und bei einem negativen Vergleichsergebnis das Datum (X) als ungültig verworfen wird.

2. Verfahren nach Anspruch 1, wobei die zweite Kopie des Datums (X) in verfälschter Form (f(X)) bereitgestellt wird.

3. Verfahren nach Anspruch 2, wobei das Datum in verfälschter Form (f(X)) einen Wert hat, der gleich dem Komplementärwert des Werts des Datums (X) selbst ist.

4. Verfahren nach einem der Ansprüche 1 bis 3, wobei nach mindestens einer Rechenoperation unter Verwendung eines Datums (X), insbesondere nach einem Abspeichern und/oder nach einem Vergleichen mit positivem Vergleichsergebnis und/oder einem Verändern des Werts des Datums (X), ein Ereigniszähler um einen vorbestimmten Zählschritt verändert wird.

5. Verfahren nach einem der Ansprüche 1 bis 4, wobei als sensibles Datum ein Wert eines Fehlbedienungszählers (FBZ) vorgesehen ist.

6. Verfahren nach einem der Ansprüche 1 bis 5, wobei als sensibles Datum eine Zugriffsbedingung oder/und eine Zustandsbedingung vorgesehen ist.

7. Verfahren nach Anspruch 6, wobei durch die Zugriffsbedingung angegeben ist, ob für einen Zugriff auf vorbestimmte Speicherinhalte des Datenträgers eine PIN-Eingabe erforderlich ist oder nicht.

8. Verfahren nach einem der Ansprüche 1 bis 7, wobei das Datum (X) in einen Ziel-Speicherbereich (MEMZ) gespeichert wird.

9. Verfahren nach Anspruch 8, wobei das Datum (X) in den Ziel-Speicherbereich (MEMZ; RAM) gespeichert wird nachdem die erste Kopie und die zweite Kopie des Datums miteinander verglichen worden sind.

10. Verfahren nach Anspruch 9, wobei das Datum (X) anlässlich des positiven Vergleichsergebnisses in den Ziel-Speicherbereich (MEMZ) gespeichert wird.

11. Verfahren nach Anspruch 8, wobei das Datum (X) in den Ziel-Speicherbereich (MEMZ; EEPROM) gespeichert wird bevor die erste Kopie und die zweite Kopie des Datums miteinander verglichen werden.

12. Verfahren nach einem der Ansprüche 1 bis 11, wobei
- in Schritt a) die erste Kopie des Datums (X) in einem ersten Teil-Speicherbereich (MEMQL) eines Quell-Speicherbereichs (MEMQ; EEPROM) des Datenträgers bereitgestellt wird und die zweite Kopie des Datums X; f(X)) in einem davon getrennten zweiten Teil-Speicherbereich (MEMQL) des Quell-Speicherbereichs (MEMQ; EEPROM) bereitgestellt wird und
- in Schritt b) das Datum (X) aus dem ersten Teil-Speicherbereich (MEMQL) und das Datum (X; f(X)) aus dem zweiten Teil-Speicherbereich (MEMQH) miteinander verglichen werden.

13. Datenträger mit einem Mikroprozessor und mit einem darin implementierten Verfahren nach einem der Ansprüche 1 bis 12.
